# EUROPEAN PATENT APPLICATION

(11) **EP 1 036 709 A2**
(43) Date of publication of application: **20.09.2000**
(21) Application number: 00302084.9
(22) Date of filing: 15.03.2000
(51) Int. Cl.: B60R 13/02, F16B 5/02

(54) **Fastener with two edge seals formed opposite one another**

(30) Priority: 16.03.1999 DE 29904788 U
(71) Applicant: EMHART INC., Newark, Delaware 19711 (US)
(72) Inventor: Seng, Hans-Peter, 35447 Reiskirchen-Bersrod (DE)
(74) Representative: Bell, Ian Stephen

(57) **Abstract**

Fastener (1) for fastening components (7) to a structure (8), with a shank (2) having a head (14) with a front face (3) at least partially formed by the head (14) and a recess (4) extending from the front face (3) in the longitudinal direction of the shank (2), with which a fastening element (10) can be brought into a working connection, which fastening element extends through an orifice (19) designed in the component (7), wherein an upper edge seal (20) is formed on the head (14) as a seal against the component (7). A lower edge seal (21) is situated opposite the upper edge seal (20) is formed on the head (14) as a seal against a structure (8). The edge seals (20, 21) have a common base (22). The cross-sectional area of the base (22) is smaller than the front face (3) enclosed by the upper edge seal (20) or than a face (17) enclosed by the lower edge seal (21).

## Description

The invention relates to a fastener for fastening components to a structure according to the preamble of claim 1.

In particular in the field of motor vehicle manufacture it is known to fix components, which may, for example, be connecting strips, floor carpets or interior fittings, to the car body structure by means of fasteners. The car body has an orifice for this purpose, through which a shank of the fastener extends.

Fasteners of this type are known, for example, from DE-A1-20 27 111. The fastener has a shank. The shank has a recess extending from a front face in the longitudinal direction of the shank. A fastening element, for example in the form of a screw nail, can be put in to fix the fastener to the structure. With the fastener known from DE-A1 20 27 111 the shank is slit, so the shank is expanded when the fastener is put into the recess, causing a portion of the shank to come to rest on an inner surface of the orifice in the car body structure. By this means the fastener is on the one hand connected to the structure by a clamping action and on the other hand sealing of the orifice against fluid entering is achieved by the fact that the shank is resting on the casing of the orifice. The sealing effect of a fastening element of this type is, however, relatively limited, owing to the slit design of the fastener.

A further development of the fastener known from DE-A1-20 27 111 is described in GM 75 18 877. This fastener has a closed shank and an edge seal formed on a collar connected to the shank.

Furthermore, a fastener for sealed fixing of components to a structure is known from DE-A1-195 19 623, wherein the fastener has a basic body and a safety device to prevent it from being pulled out. The fastener partially engages in an orifice of the structure and is secured by means of the safety device against being pulled out of this axially. A ring seal is formed underneath the basic body. By means of this development of the fastener a sealed connection is created between the fastener and a component on which the fastener is arranged. The sealing effect here is dependent on the pressing force, generated by the fastener, of the seal against a sealing face.

Finally a fastener made of plastics material is known from DE 297 11 112 for fastening components to a structure, with a shank, having a head with a front face at least partially formed by the head and a recess extending from the front face in the longitudinal direction of the shank, with which a fastening element can be brought into a working connection, which fastening element extends both through an orifice formed in the component and through an orifice formed in the structure, and with a collar surrounding the shank and forming an abutment. The shank as such is designed as closed.

The object of the present invention is to provide a generic fastener, by means of which at least a sealing effect against a component can be achieved. Preferably a sealing effect against a structure is also achievable with the fastener. The fastener should also support the component against the structure. Further, orifices formed in the structure should be sealed on both sides.

This object is achieved according to the invention by a fastener with the characteristics of claim 1. Advantageous configurations and developments are the object of the dependent claims.

The fastener according to the invention for fastening components to a structure has a shank with a head, wherein the head has a front face at least partially formed by the head and the shank has a recess extending from the front face in the longitudinal direction of the shank. A fastening element extending through an orifice formed in the component can be brought into a working connection with the recess. The fastener according to the invention is characterised in that an upper edge seal is formed on the head as a seal against the component.

By means of the development of the fastener according to the invention a safe and reliable seal against a component is achieved. Possible manufacturing tolerances of the fastener and/or of an orifice inside the component do not alter the sealing effect, since a fastening element brought into a working connection brings the upper edge seal to rest on the component in such a way that a sufficiently large sealing face can be achieved.

Preferably a lower edge seal situated opposite the upper edge seal is additionally formed on the head as a seal against a structure.

By means of the additional development of the fastener with a lower edge seal, a safe and reliable seal is also achieved against a structure. Possible manufacturing tolerances of the fastener and/or of an orifice inside the structure do not alter the sealing effect, since a fastening element brought into a working connection brings the lower edge seal to rest on the structure in such a way that a sufficiently large sealing face can be achieved. With the preferred fastener a safe and reliable seal is thus achieved both against the structure and against the component.

To improve the close fit of the edge seals on the component or the structure and thus to increase the sealing effect, it is proposed that the edge seals have a common base, wherein an imaginary cross-sectional face of the base is smaller than the front face enclosed by the upper edge seal or than a face enclosed by the lower edge seal.

Preferably both the lower and the upper edge seals are designed as circular, in order to achieve complete sealing of the orifices radially.

In particular, for uniform support of the component against the structure, it is proposed that both edge seals have equal diameters, wherein preferably the upper and the lower edge seals are arranged coaxially to one another.

It is furthermore proposed that the fastener has a shank with at least one at least elastically deformable portion. By means of the working connection between the fastener and the shank of the fastener a force, substantially effective in the longitudinal direction of the shank, is exerted in the shank of the fastener, by which a substantially radial deformation of the at least elastic portion of the shank is effected, so this portion fits closely on the structure by forming a collar and surrounding the orifice and forms an abutment. The shank as such is designed as closed.

By means of this preferred development of the fastener an improved sealing of both sides of an orifice formed in the structure is achieved safely and reliably. Possible manufacturing tolerances of the fastener and/or the orifice inside the structure do not alter the sealing effect, since a sufficiently large sealing face or sealing bead can be achieved by the deformation of the portion.

Preferably the collar is designed as a seal which seals orifices designed inside the structure in an advantageous way on both sides, in other words also on the shank side.

According to an advantageous further development of the fastener it is proposed that the collar is formed by at least one portion of the shank adjacent to the front face.

In order to achieve a deformation of the portion of the shank with a relatively low power output, it is proposed that the free cross-section in the portion forming the collar, viewed in the longitudinal direction of the recess, is larger than in a following longitudinal portion of the recess. In other words the portion forming the collar has a smaller wall thickness than the further longitudinal portion of the recess.

To improve the sealing effect it is proposed that the shank has a peripheral bead on its outer surface and in the portion forming the collar. The closely fitting face of the collar on the structure is enlarged by the bead.

Preferably the bead is joined to the shank. It can consist of a soft elastic material. It is not compulsory for the shank and the portion or the bead to consist of one material. Combinations of materials are also possible.

To simplify the manufacture of the fastener it is proposed that the bead and the shank are designed as one piece.

To simplify fitting of the fastener on the structure it is proposed that the collar is arranged on the shank at a distance from the head.

The head preferably has a larger cross-section than the collar. The fastener can then be pre-fitted on the structure, the structure being situated between the head and the bead of the fastener, so there is no possibility of the fastener falling out of the orifice.

A development of the fastener is preferred in which at least the edge seals consist of a plastics material. The fastener can also consist entirely of a plastics material.

If this is the case, it is proposed, according to an advantageous further development, that the edge seals consist of a plastics material differing from the further parts of the fastener, in particular a softer plastics material.

Cumulatively to this it is proposed, according to a further advantageous further development, that the portion of the shank forming the collar also consists of a softer plastics material than the further part of the shank.

A further advantageous development provides for the edge seals and/or the portion of the shank forming the collar to be joined to the further part of the shank by two-component injection.

For further simplification of both fitting and manufacture of a fastener, it is proposed that at least the portion designed on the shank and the head are rotationally symmetrical with the edge seals designed on them, in respect of a longitudinal axis.

Further advantages and details of the invention are explained using a preferred embodiment of a fastener shown in the drawings.
Fig. 1 shows a fastener in a front view.
Fig. 2 shows the fastener according to Fig. 1 in a horizontal projection.
Fig. 3 shows the fastener according to Fig. 1 or 2 with a component on a structure.
Fig. 4 shows the fastener according to Fig. 1 or 2 in taped form in a front view.
Fig. 5 shows the taped fastener according to Fig. 4 in a horizontal projection.

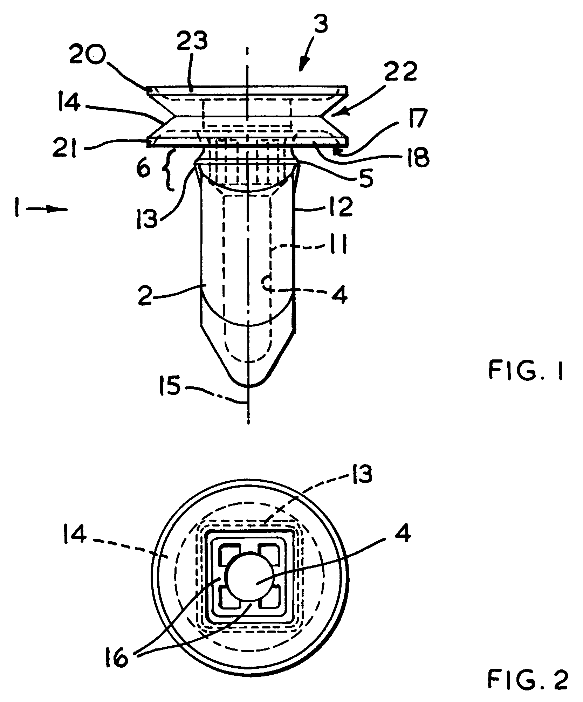

Fig. 1 shows a fastener 1 in a front view. The fastener 1 has a shank 2, extending in the longitudinal direction of a longitudinal axis 15. The outer contour of the shank 2 is, looked at transversely to the longitudinal axis 15, substantially rectangular in shape. Other outer contours of the shank 2 are possible. Preferably the shank 2 has a substantially circular cross-section.

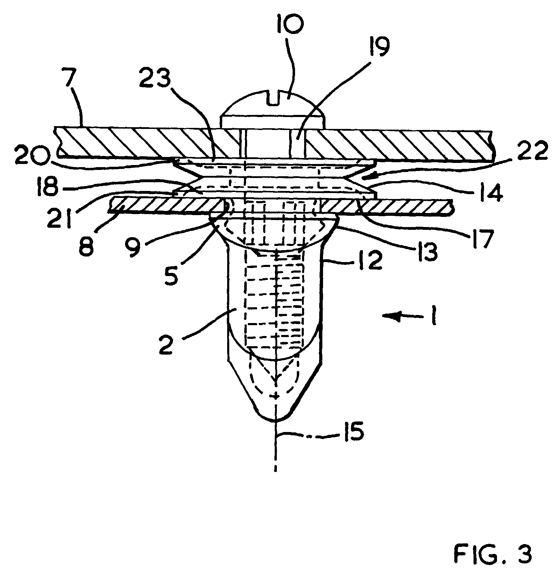

A recess 4 extends from a front face 3 in the longitudinal direction of the shank 2. The recess 4 has a substantially circular cross-section. A fastening element 10 can be placed into the recess, as shown in Fig. 3.

The shank 2 has an elastically deformable portion 6. The portion 6 of the shank 2 is designed adjacent to a face 17. The elastically deformable portion 6 forms a collar 5, which is preferably designed as forming an abutment and at the same time as a seal.

A peripheral bead 13 is designed on the outer surface 12 of the shank 2 in the portion 6 forming the collar 5. The bead 13 and the shank 2 are designed as one piece. The fastener 1 shown in Figs. 1 to 3 is made of a plastics material.

The recess 4 has a free cross-section in the region of the at least elastically deformable portion 6 which is larger than in a following longitudinal portion 11 of the recess 4.

The shank 2 has a head 14, which is formed at a distance from the elastically deformable portion 6 or from the collar 5 there. An upper edge seal 20 is formed according to the invention on the head 14 as a seal against the component 7. Preferably a lower edge seal 21 situated opposite the upper edge seal 20 is also formed on the head 14 as a seal against the structure 8.

Preferably both edge seals 20, 21 have a common base 22. The base 22 has an imaginary cross-sectional face which is smaller than the front face 3 enclosed by the upper edge seal 20 or than a face 17 enclosed by the lower edge seal 21. As can be seen from Fig. 2 both the lower 20 and the upper 21 edge seals are designed as circular and arranged coaxially to one another. Preferably both edge seals 20, 21 have equal diameters.

A first engagement region 18 is formed between the bead 13 and a face 17 of the head 14 adjacent to the bead 13, with which the structure 8 engages, as shown in Fig. 3. Additionally a second engagement region 23 is formed in the front face 3 formed in the head 14, with which the component 7 can engage. In the region of the head 14, through which the recess 4 also extends, locking projections 16 are formed, which extend radially inwards from a surface of the recess 4, as shown in Fig. 2.

In Fig. 3 a fastener is shown connected to a component 7 and a structure 8. To fix the component 7 to the structure 8, the shank 2 of the fastener 1 is guided through an orifice 9 in the structure 8. The structure 8 comes to rest between the face 17 of the head 14 and the bead 13 inside the first engagement region 18. A component 7, which may, for example, be a fastening strip, is placed on the head 14. This component 7 has a through aperture 19, through which a fastening element 10 extends. The fastening element 10, which may, for example, be a bolt, is screwed into the recess 4 of the fastener 1. This generates a force working in the direction of the structure 8 into the shank 2 and thus on to the elastically deformable portion 6, by means of which on the one hand the edge seals 20, 21 come to rest on the component 7 or the structure 8 in such a way that a sufficiently large sealing face is achieved. On the other hand the elastic deformable portion 6 is deformed by the force in such a way that it forms a collar 5 and acts as an abutment. The edge seals 20, 21 prevent fluid coming through the orifices 9, 19.

Additionally, the collar 5 surrounding the orifice 9 can be designed as a seal, so a seal is designed in each case on both sides of the structure 8.

The fastener 1 preferably consists of a plastics material. In particular the edge seals 20, 21 are made of a plastics material differing from the further parts of the fastener 1, preferably a softer plastics material. Additionally, the portion 6 of the shank 2 forming the sealing collar 5 can be made of a softer plastics material than the further part of the shank 2. Preferably the edge seals 20, 21 and/or the portion 6 of the shank 2 forming the collar 5 are joined to the head 14 or the further part of the shank 2 by two-component injection. By means of the development of the bead 13 it is possible also to use the fastener to seal orifices, the cross-section of which does not necessarily have to correspond to the cross-section of the shank 2.

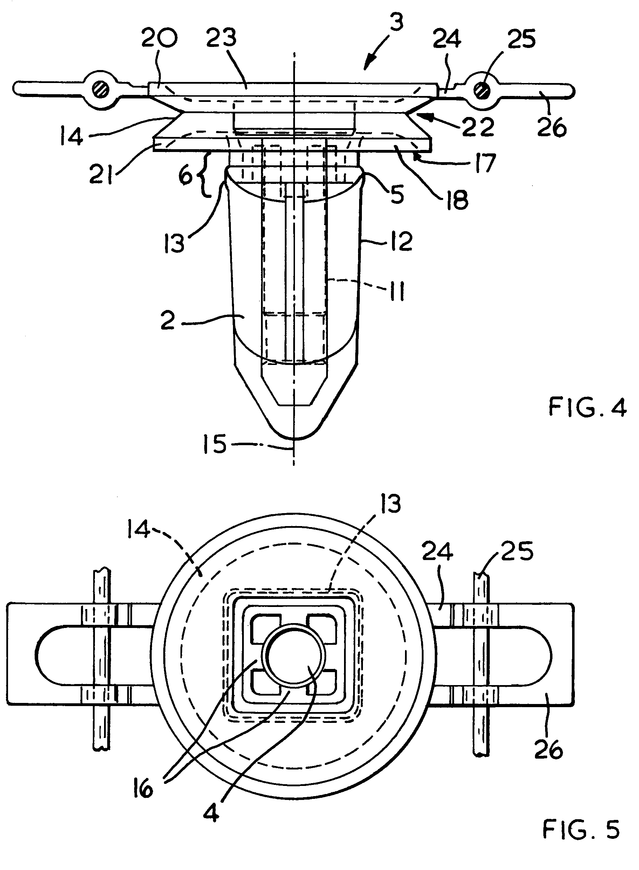

Fig. 4 and 5 show a fastener 1 taped to a belt in a front view and a horizontal projection. The fastener 1 is fixed to at least one belt 25 via side links 24. The already known belt technique enables automatic supply of fasteners 1 into a fitting position by an advantageous method. The side link 24 extends on to the fastener 1 in such a way that while the belt 25 is moving one fastener 1 after the other reaches a fitting position, where the fastener 1 is separated from the belt 25.

Preferably the belt 25 has guide elements 26, which are integrally formed with each fastening element 1 and therefore individually related to each fastening element 1, preferably as described in EP 0 506 307 (DE 692 07 459 T2).

## Claims

1. Fastener (1) for fastening components (7) to a structure (8), with a shank (2) having a head (14) with a front face (3) at least partially formed by the head (14) and a recess (4) extending from the front face (3) in the longitudinal direction of the shank (2), with which a fastening element (10) can be brought into a working connection, which fastening element extends through an orifice (19) designed in the component (7), characterised in that an upper edge seal (20) is formed on the head (14) as a seal against the component (7).

2. Fastener (1) according to claim 1, characterised in that a lower edge seal (21) situated opposite the upper edge seal (20) is formed on the head (14) as a seal against a structure (8).

3. Fastener (1) according to claim 1 or 2, characterised in that the edge seals (20, 21) have a common base (22), wherein an imaginary cross-sectional area of the base (22) is smaller than the front face (3) enclosed by the upper edge seal (20) or than a face (17) enclosed by the lower edge seal (21).

4. Fastener (1) according to claims 1 to 3, characterised in that both the lower (20) and the upper (21) edge seals are designed as circular.

5. Fastener (1) according to one of the preceding claims, characterised in that both edge seals (20, 21) have equal diameters.

6. Fastener (1) according to one of the preceding claims, characterised in that the upper (20) and the lower (21) edge seals are arranged coaxially to one another.

7. Fastener (1) according to one of the preceding claims, characterised in that the shank (2) has at least one at least partially elastically deformable portion (6), wherein the portion (6) is elastically deformed by the working connection at least to such an extent that it can be brought to rest on the structure (8) by forming a collar (5) and surrounding the orifice (9).

8. Fastener (1) according to one of the preceding claims, characterised in that the collar (5) is designed as a seal.

9. Fastener (1) according to one of the preceding claims, characterised in that the collar (5) is formed by at least one portion (6) of the shank (2) adjacent to the face (17).

10. Fastener (1) according to one of the preceding claims, characterised in that the free cross-section in the portion (6) forming the collar (5), viewed in the longitudinal direction of the recess (4), is larger than in a following longitudinal portion (11) of the recess (4).

11. Fastener (1) according to one of the preceding claims, characterised in that the shank (2) has a peripheral bead (13) on its outer surface (12) and in the portion (6) forming the collar (5).

12. Fastener (1) according to claim 11, characterised in that the bead (13) is joined to the shank (2).

13. Fastener (1) according to claims 11 or 12, characterised in that the bead (13) and the shank (2) are designed as one piece.

14. Fastener (1) according to one of the preceding claims, characterised in that the collar (5) is arranged on the shank (2) at a distance form the head (14).

15. Fastener (1) according to one of the preceding claims, characterised in that the head (14) has a larger cross-sectional area than the collar (5).

16. Fastener (1) according to one of the preceding claims, characterised in that at least the edge seals (20, 21) consist of a plastics material.

17. Fastener (1) according to claim 16, characterised in that the edge seals (20, 21) consist of a plastics material differing from the further parts of the fastener (1), in particular a softer plastics material.

18. Fastener (1) according to claim 17, characterised in that the portion (6) of the shank (2) forming the collar (5) consists of a softer plastics material than the further part of the shank (2).

19. Fastener (1) according to claims 17 or 18, characterised in that the edge seals (20, 21) and/or the portion (6) of the shank (2) forming the collar (5) are joined to the head (14) or the shank (2) by two-component injection.

20. Fastener (1) according to one of the preceding claims, characterised in that at least the portion (6) and/or the head (14) is rotationally symmetrical with the edge seals (20, 21) designed on it/them, in respect of a longitudinal axis (15).
